Europäisches Patentamt

European Patent Office

Office européen des brevets

(11) Veröffentlichungsnummer: **0 284 886**
A1

## EUROPÄISCHE PATENTANMELDUNG

(21) Anmeldenummer: 88104136.2

(22) Anmeldetag: 16.03.88

(51) Int. Cl.⁴: **C07C 85/20** , C08G 18/10 ,
C08G 18/83 , C08G 18/30

(30) Priorität: 28.03.87 DE 3710427

(43) Veröffentlichungstag der Anmeldung:
05.10.88 Patentblatt 88/40

(84) Benannte Vertragsstaaten:
AT BE CH DE ES FR GB IT LI NL SE

(71) Anmelder: BAYER AG
Konzernverwaltung RP Patentabteilung
D-5090 Leverkusen 1 Bayerwerk(DE)

(72) Erfinder: Ruckes, Andreas, Dr.
Herderstrasse 13
D-5090 Leverkusen 3(DE)
Erfinder: Rasshofer, Werner, Dr.
Leopold-Gmelin-Strasse 31
D-5000 Köln 80(DE)
Erfinder: König, Klaus, Dr.
Zum Hahnenberg 40
D-5068 Odenthal(DE)
Erfinder: Kopp, Richard, Dr.
Bilharzstrasse 15
D-5000 Köln 80(DE)

(54) **Verfahren zur Herstellung von Polyaminen und deren Verwendung zur Herstellung von Polyurethanen.**

(57) Einstufenverfahren zur Herstellung von Polyaminen mit primären Aminogruppen, vorzugsweise aromatisch gebundenen Aminogruppen, durch Hydrolyse von enständige Isocyanatgruppen aufweisenden Verbindungen mit einem NCO-Gehalt von 0,5 bis 40 Gew.-% mit 0,75 bis 40 Molen Wasser pro Äquivalent NCO-Gruppen in Gegenwart von sehr geringen Mengen eines K-, Rb-oder Cs-Hydroxids, Alkoholats oder Carboxylats in bestimmten organischen, polaren Lösungsmitteln.

EP 0 284 886 A1

## Verfahren zur Herstellung von Polyaminen und deren Verwendung zur Herstellung von Polyurethanen

Die Erfindung betrifft ein Einstufenverfahren zur Herstellung von Polyaminen mit primären Aminogruppen, vorzugsweise aromatisch gebundenen Aminogruppen, durch Hydrolyse von endständige Isocyanatgruppe aufweisenden Verbindungen mit einem NCO-Gehalt von 0,5 bis 40 Gew.-% mit 0,75 bis 40 Molen Wasser pro Äquivalent NCO-Gruppen in Gegenwart von sehr geringen Mengen eines K-, Rb-oder Cs-Hydroxids, Alkoholats oder Carboxylats in bestimmten organischen, polaren Lösungsmitteln.

Als Isocyanatgruppen aufweisende Verbindungen werden modifizierte (bevorzugt Urethan-modifizierte) Polyisocyanate oder insbesondere NCO-Prepolymere eingesetzt. Die erfindungsgemäße Hydrolyse führt unter Kohlendioxidabspaltung direkt zu den Polyaminen, die nach üblichen Methoden isoliert werden können, wobei vorzugsweise auf die Abtrennung der geringen Katalystormengen verzichtet werden kann.

Die Erfindung betrifft auch die Verwendung der erfindungsgemäßen Polyamine zur Herstellung von Polyurethan(harnstoff)en.

Es ist bekannt, daß Isocyanate durch saure oder basische Katalyse in Amine umgewandelt werden können, wie z.B. in N.V. Sidgwick, The Organic Chemistry of Nitrogen, Clarendon Press, Oxford, S. 326 (1966) sowie in J. March, Advanced Organic Chemistry: Reactions, Mechanismus and Structure, Mc Graw-Hill Book Co., New York, S. 658 (1968), belegt wird. Dabei gibt Sidgwick einen Hinweis auf die alkalische Hydrolysierbarkeit von NCO-Gruppen, der jedoch völlig unspezifisch und allgemein gehalten ist.

Hierfür wurden weiterhin Mehrstufenverfahren (DE-A-2 948 419, DE-AS 3 039 600, DE-OS 3 131 252) und Einstufenverfahren (DE-OS 3 233 400/EP-97 299, DE-OS 3 223 398/EP-97 298 und DE-OS 3 223 397/EP-97 290) vorgeschlagen. Nach den Einstufen-Hydrolyseverfahren werden (DE-OS 3 223 400) "Etherlösungsmittel" zusammen mit tertiären Aminen als Katalysatoren, (DE-OS 3 223 398) polare Lösungsmittel wie Dimethylformamid zusammen mit tertiären Aminen oder größeren Mengen an Alkalihydroxiden, Alkalisilikaten oder Alkalicyaniden als Katalysatoren, oder polare Lösungsmittel (DE-OS 3 223 397) mit Carbonaten oder Carboxylaten als Katalysatoren verwendet.

Die bekannten Verfahren zur Herstellung von Polyaminen sind alle mehr oder weniger aufwendig. Selbst bei den Einstufenverfahren sind noch weitere entscheidende Vereinfachungen wünschenswert, um die Polyaminen in wirtschaftlich noch günstigerer Weise, in noch besseren Konversionsraten NCO/NH$_2$ (d.h. höhere NH$_2$-Zahlen) und in noch glatterer Reaktion zu bekommen. Gegenüber herkömmlichen Verfarhen sollten folgende vorteilhafte Verfahrensmerkmale erreicht werden, wie daß

keine Filtration nötig ist,

daß keine destillative Abtrennung eines tert.-Amin-Katalystors nötig ist,

daß man eine drastische Verringerung der notwendigen Katalysatormenge erreicht, so daß der Katalysator im Polyamin verbleiben kann.

Außerdem sollte erreicht werden, daß eine möglichst quantitative Umwandlung von NCO in NH$_2$-Gruppen (hohe Konversionsrate NCO/NH$_2$, d.h. möglichst hohe, dem theoretischen Wert nahekommende Aminzahl) erfolgt,

daß der Anteil an monomeren Aminen möglichst gering ist,

daß keine Nebenprodukte anfallen, die entsorgt werden müssen, und

daß eine einfache Aufarbeitung der Polyamine bzw. Hilfsstoffe möglich ist.

Völlig überraschend wurde gefunden, daß diese und weitere Vorteile dann erreicht werden können, wenn die einstufige Hydrolyse von Polyisocyanaten zu Polyaminen

unter Einhaltung bestimmter Wasser/NCO-Verhältnisse,

unter Verwendung von bestimmten, wasserlöslichen organischen Lösungsmitteln,

unter Verwendung minimaler Katalysatormengen und

unter Einhaltung homogener Reaktionsbedingungen

vorgenommen wird. Bei diesen Bedingungen ist es sogar möglich, die Hydrolyse bei niedrigen Temperaturen durchzuführen.

Ein erheblicher Vorteil des erfindungsgemäßen Verfahrens wird darin gesehen, daß bei der geringen Katalystormenge keine Katalysatoren oder Umsetzungsprodukte des gebildeten CO$_2$ mit den Katalysatoren (z.B. KOH, das KHCO$_3$ und K$_2$CO$_2$ ergibt), abfiltriert werden müssen.

Da alle einsetzbaren Katalysatoren im Reaktionsmedium gut löslich sind, bestehen keine Verteilungsungleichgewichts wie bei der Verwendung von rasch sedimentierenden Alkalicarbonaten oder -Hydrogencarbonaten, wie diese entsprechend der DE-OS 3 223 297 vorliegen können.

Da sie in Lösung bleiben, bzw. voll mischbar sind, müssen sie auch nicht abfiltriert werden. Die im Endprodukt verbleibenden Katalysatoren stören im Regelfall wegen der sehr geringen Mengen, nicht. Da nach Aufarbeitung keine Salz oder Katalysatorreste entfernt werden müssen, ist diese Methode auch besonders für die Herstellung von hochviskosen oder festen Aminogruppen aufweisenden Verbindungen geeignet, aus denen bisher ungelöstes, restliches Salz oder anderes Katalysatormaterial nur sehr aufwendig entfernt werden konnte.

Außerdem ist das erfindungsgemäße Verfahren auch gut für die Hydrolyse von NCO-Prepolymeren auf Basis von Polyestern geeignet, da die - schonenden Reaktionsbedingungen kaum zu einer Spaltung der Estergruppen führen.

Da bei der erfindungsgemäßen Hydrolyse bevorzugt auch NCO-Prepolymere, die vorzugsweise durch Umsetzung von aromatischen Diisocyanaten wie z.B. Toluylendiisocyanat, mit zwei oder mehr Hydroxylgruppen aufweisenden Polyetherpolyolen oder Polyesterpolyolen erhalten werden, eingesetzt werden und solche NCO-Prepolymere in der Regel, noch einen Anteil monomerer, niedermolekularer Polyisocyanate enthalten können, die bei der Herstellung der höhermolekularen Aminoverbindungen in monomere, niedermolekulare Amine z.B. 2,4-Toluylendiamin (TDA) übergehen, ist man außerdem bestrebt, ein Hydrolyseverfahren zur Verfügung zu stellen, bei dem die Endprodukte einen möglichst geringen Anteil an niedermolekularen Di-oder Polyaminen enthalten.

Aus mehreren Gründen ist man bestrebt den Anteil an monomerem Aminen in den höhermolekularen Aminopolyethern oder Aminopolyestern so weit wie möglich zu reduzieren, um jegliche physiologische Gefährdung zu vermeiden, um den bekannten negativen Einfluß von freien, aromatischen, niedermolekularen Amine auf die Licht-und Verfärbungsstabilität von Aminopolyether oder -ester, bzw. der damit hergestellten PU-Kunststoffen auszuschalten und um jederzeit PU-Kunststoffe mit reproduzierbaren Eigenschaften zu erhalten.

Eine Möglichkeit, den Gehalt an monomerem Amin (z.B. an TDA) in den hochmolekularen Polyaminen sehr gering zu halten, besteht beispielsweise darin, in den entsprechenden NCO-Prepolymeren vor der Hydrolyse den Gehalt an monomerem, niedermolekularem Isocyanat (z.B. TDI), z.B. mit Hilfe eines sogenannten Dünnschichtverdampfer, durch Abdestillieren zu senken. Diese Verfahrensweise ist kostspielig und aufwendig.

Eine andere Möglichkeit, ein Endprodukt mit einem geringen Antiel niedermolekularem Amin zu erhalten, wäre, bei der Herstellung des Prepolymeren mit einem Unterschuß Diisocyanat, bezogen auf ein "ideales" NCO-Prepolymer (NCO/OH-Verhältnis 2:1), zu arbeiten. Nachteilig ist hierbei, daß sowohl das NCO-Prepolymer als auch das Endprodukt erhöhte Viskositäten besitzen, was zu erschwerter Verarbeitbarkeit führt.

In der DOS 3 437 632 wird vorgeschlagen, den Gehalt an monomeren, niedermolakularen Aminen durch selektive Umsetzung mit Mono-, Di-und/oder Polyisocyanaten (z.B. Propylisocyanate) zu senken. Allerdings ist auch hierbei eine erheblich erhöhte Viskosität in Kauf zu beobachten.

Schließlich wird in der DOS 3 223 397 die Mitverwendung untergeordneter Mengen einer "H-aktiven" Verbindung bei der Herstellung der NCO-Vorpdoukte empfohlen. Auch hierbei wird ein starker Viskositätsanstieg im Endprodukt registriert.

Überraschenderweise wurde nun gefunden, daß der Gehalt an niedermolekularen Aminen in den erfindungsgemäß enthaltenen Polyaminen selbst bei Einsatz von 2:1 NCO-Prepolymer erheblich niedriger ist ($\leq$ 0,6 Gew.-%), als dies nach dem Gehalt an freien monomeren Isocyanaten (ca. $\geq$ 1 Gew.-%) in der Ausgangsverbindung zu erwarten wäre. Man erhält durch die erfindungsgemäße Hydrolyse Polyamine mit einem sehr geringen Gehalt an freiem monomeren Amin, ohne daß vorher eine Dünnschichtdestillation oder ein Zusatz von Isocyanat o.ä. (wie gemäß DOS 3 437 632) erforderlich wäre.

Gegenstand der Erfindung ist daher ein Einstufenverfahren zur Herstellung von vorzugsweise höher molekularen Polyaminen mit primären Aminogruppen durch Hydrolyse von NCO-Gruppen aufweisenden Verbindungen in Wasser enthaltenden organischen Lösungsmitteln unter Zusatz basischer Katalysatoren, das dadurch gekennzeichnet ist, daß man

a) NCO-Gruppen, vorzugsweise aromatisch gebundene NCO-Gruppen, aufweisenden Verbindungen mit einem NCO-Gehalt von 0,5 bis 40 Gew.-%, vorzugsweise NCO-Prepolymere mit einem NCO-Gehalt von 1,2 bis 25 Gew.-%, oder modifizierten Polyisocyanaten mit einem NCO-Gehalt von 1,5 bis 20,5 Gew.-%,

b) mit 0,75 bis 40, bevorzugt 1,5 bis 10, Molen Wasser pro Äquivalent NCO der Komponente a),

c) in Gegenwart von 0,0001 bis 0,099 Gew.-%, vorzugsweise 0,001 bis 0,08 Gew.-%, bezogen auf 100 Gew.-% der Komponente a), Kalium-, Rubidlum-oder Casium-Hydroxiden oder Alkoholaten oder von 0,0001 bis 0,0099 Gew.-%, vorzugsweise 0,001 bis 0,008 Gew.-% der Komponente a) von Kalium-, Rubidium-oder Casium-Carboxylaten als basische Katalysatoren,

d) und in Gegenwart von $\geq$ 10 Gew.-%, bezogen auf 100 Gew.-% der Komponente a), vorzugsweise 20 bis 2.000 Gew.-%, besonders bevorzugt 40 bis 1.000 Gew.-%, wassermischbarer polarer organischer Lösungsmittel mit Nitril-, Keton-, Sulfoxid-oder Ether-Gruppen und mit einem Siedebereich von 56 bis 250°C,

e) unter Aufrechterhaltung einer homogenen Reaktionsphase bei Temperaturen von 40 und 170°C, bevorzugt 50 bis 130°C, hydrolysiert.

Die Erfindung betrifft auch die nach den erfindungsgemäßen Verfahren erhaltenen Polyamine, vorzugsweise solche, die 0,46 bis 9,52 Gew.-%, primäre, vorzugsweise aromatisch gebundene NH₂-Gruppen aufweisen.

Ein weiterer Gegenstand der Erfindung sind auch Verfahren zur Herstellung von gegebenenfalls zellförmigen Polyurethan(harnstoff)en durch Umsetzung der erfindungsgemäß erhaltenen Polyamine, mit
Polyisocyanaten, gegebenenfalls
weiteren Verbindungen mit gegenüber Isocyanatengruppen reaktiven Gruppen, gegebenenfalls
in Anwesenheit an sich bekannter Hilfs-und Zusatzstoffe und/oder Lösungsmittel.

Die zwei oder mehrere, aromatische oder heterocyclische, vorzugsweise aromatische, NCO-Gruppen aufweisenden, im erfindungsgemäßen Verfahren einsetzbaren NCO-Verbindungen a), im folgenden auch kurz "NCO-Verbindungen" genannt), stellen entweder modifizierte Polyisocyanate dar, wie sie durch teilweise Umwandlung der Isocyanatgruppen in Urethan-, Harnstoff-, Biuret-, Uretdion-, Isocyanurat-und/oder Uretonimingruppen entstehen,
oder sind sogenannten NCO-Prepolymere aus gegenüber NCO-Gruppen rekative H-Gruppen tragenden, mehrwertigen Verbindungen des Molekulargewichts 62 bis 12000, vorzugsweise 400 bis 6000, und (überschüssigen) Mengen an aromatischen Polyisocyanaten oder sind gegebenenfalls (weniger bevorzugt) Semiprepolymere aus NCO-Prepolymeren und zusätzlichen niedermolekularen Polyisocyanaten.

Als modifizierte aromatische Polyisocyanate sind beispielsweise geeignet: .
Urethangruppen-haltige Polyisocyanate (durch Modifizierung mit niedermolekularen Polyolen entstanden), Harn stoffgruppen aufweisende Polyisocyanate (z.B. durch Wassermodifizierung, DE-PS 1 230 778), Biuretgruppen aufweisende Polyisocyanate (US-PS 3 124 605, 3 201 372, GB-PS 889 050), Isocyanuratgruppen aufweisende Polyisocyanate (DE-PS'en 1 022 789 und 1 222 067) sowie Uretdion-oder Uretonimingruppen enthaltende, dimere oder oligomere Polyisocyanate. Es sind dies bekannte Verbindungen oder nach bekannten Verfahren zugänglich. Eine Reihe solcher Uretdionpolyisocyanate ist in Analytical Chemistry of the Polyurethanes, Band 16/III, High-Polymers-Series (Wiley 1969) aufgeführt.

Solche modifizierten Polyisocyanate mit Urethan-und/oder Harnstoff-und/oder Biuret-und/oder Uretdion-und/oder Isocyanurat-und/oder Uretonimin-Gruppen, wie sie im erfindungsgemäßen Verfahren einsetzbar sind, haben üblicherweise einen NCO-Gehalt von 1,5 bis 20.5 Gew.-%, bevorzugt 5 bis 20,5 Gew.-%. Besonders bevorzugt sind hierbei urethangruppenhaltige Polyisocyanate (durch Modifizierung mit niedermolekularen (Molekulargewichte 62 bis 399)) Di-und/oder Polyolen), mit NCO-Gehalten von 1,5 bis 20,5 Gew.-%, bevorzugt 5 bis 20,5 Gew.-%.

Die im erfindungsgemäßen Verfahren einzusetzenden NCO-Verbindungen a) sind besonders jedoch NCO-Prepolymere, wie sie in an sich bekannter Weise durch Umsetzung von niedermolekularen und/oder höhermolekularen Hydroxy-und/oder Amino-und/oder Thiolgruppen als reaktive Gruppen enthaltenden Verbindungen (Molekulargewicht 62 bis ca. 12000) mit einem Überschuß an Polyisocyanaten entstehen.

Als Polyisocyanate zur Herstellung der freie NCO-Gruppen aufweisenden Verbindungen kommen im Prinzip beliebige, aromatische und heterocyclische Di-und Polyisocyanate in Frage, wie sie z.B. von W. Siefken in Justus Liebigs Annalen der Chemie, 562, S. 75-136, (1949), beschrieben werden, oder wie sie, zusammen mit für diese Umsetzungen geeigneten niedermolekularen und/oder höhermolekularen Hydroxy-und/oder Amino-und/oder Thiolgruppen als reaktive Gruppen enthaltende Verbindungen des MG-Bereichs 32 und 60-12000, auf S. 15-25 der DE OS 3 223 400 aufgeführt sind, bzw. im Stand der Technik bekannt sind.

Für das erfindungsgemäße Verfahren werden NCO-Prepolymere bevorzugt, die aus höhermolekularen Polyolen (Molmasse 400-12000), gegebenenfalls unter Mitverwendung von bekannten Kettenverlängerungsmitteln Art (Molmasse 62-399), durch Umsetzung mit aromatischen Diisocyanaten im Äquivalentverhältnis von 1:1,5 bis 1:2,8, insbesondere ca. 1:1,5 bis 1:2, erhalten worden sind.

Der NCO-Gehalt der eingesetzten (vorzugsweise urethangruppenhaltige) NCO-Prepolymere sollte 0,5 % bis 40 Gew.%, bevorzugt 1,2 bis 25 Gew.-%, insbesondere aber 1,5 bis 10 Gew.-% bei Funktionalitäten von 2 bis 8, bevorzugt 2 bis 4 und insbesondere 2 bis 3 betragen.

Im erfindungsgemäßen Verfahren können jedoch auch sogenannte "Semiprepolymere", d.h. Mischungen von NCO-Prepolymeren oder modifizierten Polyisocyanaten mit weiteren freien Polyisocyanaten, eingesetzt werden.

Als Komponente b) wird Wasser, bevorzugt in flüssiger Form, eingesetzt.

Bezogen auf 1 Äquivalent NCO werden ≥0,75 Mol, bevorzugt ≥0,75-40 Mol, besonders bevorzugt 1,5-10 Mol Wasser, verwendet.

Als Katalysatoren c) werden bevorzugt eingesetzt:

1. Basische, keine NCO-reaktiven Gruppen enthaltende K-, Rb- oder Cs-Salze von Mono-oder Polycarbonsäuren mit bis zu 18 C-Atomen, entsprechende Alkoholate mit C.-C₆, vorzugsweise C.-C₄, oder entsprechende Hydroxide.

Bevorzugt sind die Kaliumverbindungen, insbesondere KOH, oder Kaliumformiat.

Als Lösungsmittel-Komponente d) werden wassermischbare, polare organische Lösungsmittel mit Nitril-, Keton-, Sulfoxid-oder Ether-Gruppen mit einem Siedebereich von 56 bis 250°C, vorzugsweise aliphatische Nitrile mit $C_2$-$C_{10}$, aliphatische Ketone mit $C_2$-$C_{10}$ und/oder aliphatische Sulfoxide mit $C_2$-$C_{13}$ oder Dioxan eingesetzt.

Besonders bevorzugt werden Acetonitril, Aceton, Methylisopropylketon und/oder Dimethylsulfoxid eingesetzt. Die Lösungsmittel können auch in beliebigen Mischungsverhältnissen zueinander eingesetzt werden.

Für die Mengen (insbesondere die Obergrenzen) au einzusetzenden Lösungsmitteln d) gelten folgende Randbedingungen des Verfahrens:

1. Pro 100 Gew.-% NCO-Verbindung a) sollen in der Hydrolyse-Reaktionsmischung 20 bis 2000, bevorzugt 40 bis 1000 Gew.-% d) verwendet werden.

2. Es muß soviel Wasser b) und gegebenenfalls Lösungsmittel d) verwendet werden, daß eine im wesentlichen homogene (höchstens schwach trübe) oder vorzugsweise eine homogene, klare Lösung mit der NCO-Verbindung bei den Reaktionstemperaturen gebildet wird; besonders bevorzugt wird soviel Wasser zugegeben, daß eine bei allen Verfahrenstemperaturen einphasige Mischung entsteht, jedoch immer unter Einhaltung des genannten Verhältnisses von Wasser:NCO-Komponente a).

Die katalytisch wirkenden Verbindungen werden im allgemeinen den Lösungsmitteln und Wasser zugesetzt. Die Zugabe zur Isocyanatgruppenhaltigen Verbindung ist u.U. möglich, aber nicht bevorzugt.

Zur Hydrolyse der NCO-Verbindung zu Polyaminen mit hinreichend hoher Aminzahl (hoher Konversionsrate) ist es günstig, eine Konzentration der NCO-Verbindung von ≤75, vorzugsweise ≤55 Gew.-% in der Reaktionsmischung aufrechtzuerhalten.

Die erfindungsgemäße Reaktion wird bevorzugt in homogener Phase durchgeführt. Durch ein geringfügiges Überdosieren der Wassermenge oder der Menge der NCO-Verbindung kann gegebenenfalls vorübergehend eine leichte Trübung der Reaktionsmischung erhalten werden, da die Ausgangsstoffe nicht mehr vollständig gelöst sind.

Andererseits sollte darauf geachtet werden, daß genügend Wasser vorhanden ist, um die eingesetzte Katalysatormenge homogen zu lösen.

Wie bereits ausgeführt, kann die Reaktion bei Temperaturen von 40 bis 170°C durchgeführt werden. Bevorzugt wird jedoch bei Temperaturen von 50 bis 130°C gearbeitet, da hierbei die besten Raum/Zeit-Ausbeuten bei gleichzeitig hoher Löslichkeit und überrachsenderweise geringster Harnstoff-Verlängerung erreicht werden. Unter besonderen Umständen kann es auch notwendig werden, die Reaktion unter Druck durchzuführen, um die erforderlichen Temperaturen einhalten zu können. Außerdem sollte beachtet werden, daß je weniger polar und/oder wasserlöslich das jeweils eingesetzte Lösungsmittel ist, desto größer die Verdünnung und/oder Katalysatormenge und/oder Temperatur (gegebenenfalls durch erhöhten Druck erreichbar) gewählt werden sollte, um hohe NOC/NH₂-Konversionsraten zu erreichen. Bei Erhöhung der Katalysatormenge kann es gegebenenfalls auch notwendig sein, die Wassermenge zu erhöhen, um eine vollständige Lösung des Katalysators im Reaktionsgemisch zu gewährleisten.

Durch einige wenige Vorversuche lassen sich die von den Ausgangsverbindungen abhängigen optimalen Mischungsverhältnisse zur Erreichung honogener Mischungen unter Beachtung der Verhältnisse zwischen a), b), c) und d) ermitteln.

Das Einsetzen der Reaktion ist durch die fast spontane Abspaltung von $CO_2$ zu erkennen, die auch bereits bei niedrigen Temperaturen, z.B. 10°C, beobachtbar ist. Es ist jedoch erbeblich günstiger, erfindungsgemäß bei den angegebenen höheren Temperaturen zu arbeiten, um die Harnstoffbildung zurückzudrängen. Wichtig ist, daß für eine sehr gute und schnelle Durchmischung unter homogener Lösung der Reaktanten gesorgt wird, was im wesentlichen durch die Verwendung der Lösungsmittel sichergestellt werden muß. In gleicher Richtung wirkt auch die Viskositätsverminderung bei Anwendung der höheren Reaktionstemperaturbereiche. Die Reaktion kann diskontinuierlich oder kontinuierlich durchgeführt werden.

Zur kontinuierlichen oder diskontinuierlichen Ausführungsform gilt das in DE OS 3 223 397, S. 32, Z. 20 bis S. 35, Z. 10 Offenbarte.

Auch die Aufarbeitung kann kontinuierlich oder diskontinuierlich erfolgen. Die Aufarbeitung des Reaktionsgemisches geschieht nach bekannten Methoden, wie extraktiv, über Phasentrennung oder destillativ.

Bevorzugt erfolgt die Aufarbeitung des Reaktionsgemisches ohne Phasentrennung so, daß nach Beendigung der Reaktion (keine $CO_2$-Entwicklung mehr zu beobachten) das Lösungsmittel bzw. Lösungsmittel/Wasser-Gemisch, bevorzugt unter Anwendung von Vakuum, z.B. 1 - 700 Torr, abdestilliert wird, wobei zur Entfernung flüchtiger Reste noch höheres Vakuum, z.B. 0,001 - 1 Torr, angelegt werden kann. Ein Temperaturbereich von anfangs ca. 60 -100°C, später 80 - 100°C, hat sich hierbei bewährt. Das abdestillierte Lösungsmittel kann, gegebenenfalls mehrmals, wiederverwendet werden.

Die nach der Aufarbeitung erfindungsgemäß erhaltenen Polyamine stellen im allgemeinen farblose bis schwach gefärbte, mittelviskose bis hochviskose und gegebenenfalls höherschmelzende Produkte mit den bereits angegebenen Aminogruppengehalten dar. Diese Polyamine weisen entsprechend ihren Ausgangsstoffen ferner Urethan- und/oder Harnstoff-und/oder Uretdion-und/oder Isocyanurat-und/ oder Biruetgruppen und/oder Uretonimingruppen, sowie gegebenenfalls Ether- und/oder Acetal-und/oder Carbonat-und/oder Ester- und/oder Thioether und/oder Dialkylsiloxangruppen und/oder die Reste von Polybutadienen auf, wie sie bereits in den NCO-Verbindungen vorgelegen haben. Durch Nebenreaktionen können jedoch auch zusätzliche Bindungen enstehen, z.B. Harnstoffgruppen aus bereits verseiften Anteilen und noch verbleibenden NCO-Gruppen während der Hydrolyseraktion. Die Menge der in den Polyaminen enthaltenen primären aromatischen Aminogruppen entspricht maximal der Menge der NCO-Gruppen in den NCO-Verbindungen, also etwa 0,19 bis 15,23 Gew.-% $NH_2$ (bei 0,5 bis 40 Gew.-% NCO), bevor zugt 0,46 bis 9,52 Gew.-% $NH_2$ (bei 1,2 bis 25 Gew.-% NCO) und besonders bevorzugt 0,58 bis 3,81 Gew.-% $NH_2$ (bei 1,5 bis 10 Gew.-% NCO).

Die erfindungsgemäß erhaltenen, bevorzugt aromatischen Polyamine werden wegen ihres niedrigen Dampfdruckes vorzugsweise als Reaktionspartner für gegebenenfalls blokkierte Polyisocyanate bei der Herstellung von Polyurethanen (Polyurethanharnstoffen), gegebenenfalls zellhaltigen Polyurethankunststoffen oder Polyurethanschaumstoffen eingesetzt, wobei sie gegebenenfalls auch mit anderen niedermolekularen (Molekulargewicht 32 bis 399) und/oder höhermolekularen (Molekulargewicht 400 bis ca. 12 000) Verbindung mit gegenüber Isocyanaten reaktiven Gruppen kombiniert werden können. Geeignete Ausgangskomponenten für die an sich bekannte Herstellung von Polyurethankunststoffen werden oben im Zusammenhang mit der Prepolymerherstellung bzw. auch in DE-A 2 302 564, DE-A 2 432 764 US-PS 3 903 679) sowie in den DE-A 2 639 083, 2 512 385, 2 513 815, 2 550 796, 2 550 797, 2 550 833, 2 550 860 und 2 550 862 gennant. Dort finden sich auch Hinweise auf bei der Polyurethanherstellung gegebenenfalls mitzuverwendende Hilfs-und Zusatzstoffe.

Verfahren zur Herstellung von Polyurethan-(harnstoff)en unter Einsatz der erfindungsgemäß erhaltenen Polyamine ist ebenfalls Gegenstand der vorliegenden Erfindung: Es können so z.B. Elastomere, Beschichtungen, Fäden in der Applikation aus Schmelzen, Lösungen, Dispersionen oder Reaktivkomponentenmischungen hergestellt werden.

Weitere Verwendungszwecke der erfindungsgemäß hergestellten Polyamine sind z.B. Kupplungskomponenten für Diazofarbstoffe, Härter für Epoxid-und Phenolharze, sowie alle anderen an sich bekannten Reaktionen von Aminen wie Amid- oder Imidbildung und andere.

Die folgenden Beispiele dienen der Erläuterung des erfindungsgemäßen Verfahrens. Wenn nicht anderes vermerkt, sind Mengenangaben als Gewichtsteile bzw. Gewichtsprozente zu verstehen.

### Beispiel 1

In diesem Beispiel wird ein NCO-Prepolymer mit einem NCO-Gehalt von 3,6 % verwendet, hergestellt durch 3-stündiges Rühren eines Gemisches aus einem Polyether (Propylenglykol ← Propylenoxid) der OH-Zahl 56 und Touylen-2,4-diisocyanat im Äquivalentverhältnis NCO:OH = 2:1 bei 80°C.

Vorgelegt wird ein Gemisch aus 1000 g Acetonitril, 60 g Wasser (Acetontril/Wasser-Verhältnis = 33,3:1; 4,0 Mol Wasser pro NCO-Äquivalent) und 0,2 g KOH (0,02 Gew.-%, bezogen auf NCO-Prepolymer) und bis zum Rückfluß erhitzt. Innerhalb von 30 Minuten werden 1.000 g des obigen Prepolymeren zugegeben.

Nach Beendigung der Zugabe wird noch 5 Minuten nachgerührt (rasch abklingende $CO_2$-Entwicklung) und dann durch Anlegen von Vakuum (zuerst 19,5 mbar, dann 0,13 mbar bei 80 bis 100°C) DMF und Wasser abdestilliert.

NH-Zahl ($HClO_4$):     46,9 mg KOH/g
TDA-Gehalt (%):     0,417

### Beispiel 2

Vorgelegt wird ein Gemisch aus 6.900 g Aceton, 210 g Wasser (Acetonitril/Wasser-Verhältnis = 32,8:1; 7,78 Mol Wasser pro NCO-Äquivalent) und 0,35 g KOH (0,02 Gew.-%, bezogen auf NCO-Prepolymer) und bis zum Rückfluß erhitzt. Innerhalb von 40 Minuten werden 1.750 g des Prepolymeren aus Beispiel 1 mit 3,6 % NCO zugegeben. Die Aufarbeitung erfolgt wie in Beispiel 1.

NH-Zahl ($HClO_4$):     42,6 mg KOH/g
NH-Zahl ($Ac_2O$/Py):     42,9 mg KOH/g
S-Zahl ($Ac_2O$/Py):     <0,1 mg KOH/g
TDA-Gehalt (%):     0,273

### Beispiel 3

In diesem Beispiel wird ein NCO-Prepolymer mit einem NCO-Gehalt von 3,45 % verwendet, hergestellt durch 3-stündiges Rühren eines Gemisches aus einem Polyether (Propylenglykol ← Propylenoxid) der OH-Zahl 56 und Touylen-2,4-diisocyanat im Äquivalentverhältnis NCO:OH = 2:1 bei 80°C.

Vorgelegt wird ein Gemisch aus 7,000 g MEK, 210 g Wasser (MEK/Wasser-Verhältnis = 33,3:1; 8,1 Mol Wasser pro NCO-Äquivalent) und 0,35 g KOH (0,02 Gew.-%, bezogen auf NCO-Prepolymer) und bis zum Rückfluß erhitzt. Innerhalb von 40 Minuten werden 1.750 g des oben beschriebenen Prepolymer zugegeben. Die Aufarbeitung erfolgt wie in Beispiel 1.

NH-Zahl (HClO₄): 40,4 mg KOH/g
NH-Zahl (Ac₂O/Py): 41,2 mg KOH/g
S-Zahl (Ac₂O/Py): <0,1 mg KOH/g
TDA-Gehalt (%): 0,15

### Beispiel 4

Vorgelegt wird ein Gemisch aus 1.000 g DMSO, 15 g Wasser (DMSO/Wasser-Verhältnis = 66,6:1; 1,94 Mol Wasser pro NCO-Äquivalent) und 0,05 g KOH (0,01 Gew.-%, bezogen auf NCO-Prepolymer) und bis zum Rückfluß erhitzt. Innerhalb von 15 Minuten werden 500 g des Prepolymeren aus Beispiel 1 mit 3,6 % NCO zugegeben. Die Aufarbeitung erfolgt wie in Beispiel 1.

NH-Zahl (HClO₄): 47,6 mg KOH/g
NH-Zahl (AC₂O/Py): 49,4 mg KOH/g
S-Zahl (Ac₂O/Py): <0,1 mg KOH/g
TDA-Gehalt (%): 0,529

### Beispiel 5

In diesem Beispiel wird ein NCO-Prepolymer mit einem NCO-Gehalt von 3,2 % verwendet, hergestellt durch 3-stündiges Rühren eines Gemisches aus einem Polyether (Propylenglykol ← Propylenoxid) der OH-Zahl 56 und Touylen-2,4-diisocyanat im Äquivalentverhältnis NCO:OH = 2:1 bei 80°C.

Vorgelegt wird ein Gemisch aus 1.970 g Aceton, 200 g Wasser (Aceton/Wasser-Verhältnis = 9,8:1; 29 Mol Wasser pro NCO-Äquivalent) und 0,1 g KOH (0,02 Gew.-%, bezogen auf NCO-Prepolymer) und bis zum Rückfluß aufgeheizt. Innerhalb von 15 Minuten werden 500 g des oben beschriebenen Prepolymer zugegeben. Die Aufarbeitung erfolgt wie in Beispiel 1.

NH-Zahl (HC1O₄): 42,9 mg KOH/g

### Beispiel 6

Vorgelegt wird ein Gemisch aus 770 g Acetonitril, 15 g Wasser (Acetonitril/Wasser-Verhältnis = 51,3:1, 1,94 Mol Wasser pro NCO-Äquivalent) und 0,05 g KOH (0,01 Gew.-%, bezogten auf NCO-Prepolymer) und bis zum Rückfluß erhitzt. Innerhalb von 15 Minuten werden 500 g des Prepolymeren aus Beispiel 1 mit 3,6 % NCO zugegeben. Die Aufarbeitung erfolgt wie in Beispiel 1.

NH-Zahl (HClO₄): 43,7 mg KOH/g
NH-Zahl (Ac₂O/Py): 45,7 mg KOH/g
TDA-Gehalt (%): 0,393

### Beispiel 7

Vorgelegt wird ein Gemisch aus 1365 g Acetonitril, 25 g Wasser (Acetonitril/Wasser-Verhältnis = 54,6:1; 3,24 Mol Wasser pro NCO-Äquivalent) und 0,1 g KOH (0,02 Gew.-%, bezogen auf NCO-Prepolymer) und bis zum Rückfluß aufgeheizt. Innerhalb von 15 Minuten werden 500 g des Prepolymeren aus Beispiel 1 mit 3,6 % NCO zugegeben. Die Aufarbeitung erfolgt wie in Beispiel 1.

NH-Zahl (HClO₄): 46,1 mg KOH/g
NH-Zahl (Ac₂O/Py): 49,6 mg KOH/g
S-Zahl (Ac₂O/Py): <0,2 mg KOH/g

### Beispiel 8

Vorgelegt wird ein Gemisch aus 46 kg Aceton, 690 g Wasser (Aceton/Wasser-Verhältnis: 66,6:1, 1,98 Mol Wasser pro NCO-Äquivalent) und 2,3 g KOH (0,01 Gew.-%, bezogen auf NCO-Prepolymer) und unter 3,5 bar auf ca. 100°C erhitzt. Innerhalb von 30 Minuten werden 23 kg 50°C warmes Prepolymer wie aus Beispiel 1 mit 3,52 % NCO eingepumpt. Die Aufarbeitung erfolgt wie in Beispiel 1.

NH-Zahl (HClO₄): 43,3 mg KOH/g
TDA-Gehalt (%): 0,47

### Beispiel 9

Vorgelegt wird ein Gemisch aus 1365 g Acetonitril, 25 g Wasser (Acetonitril/Wasser-Verhältnis = 54,6:1, 3,24 Mol Wasser pro NCO-Äquivalent) und 0,1 g KOH (0,02 Gew.-%, bezogen auf NCO-Prepolymer) und bis zum Rückfluß aufgeheizt. Innerhalb von 15 Minuten werden 500 g des Prepolymeren aus Beispiel 1 mit 3,6 % NCO zugegeben. Die Aufarbeitung erfolgt wie in Beispiel 1.

NH-Zahl (HClO₄): 46,1 mg KOH/g
NH-Zahl (Ac₂O/Py): 49,6 mg KOH/g
S-Zahl (Ac₂O/Py):<0,2 mg KOH/g

Beispiel 10

In diesem Beispiel wird ein NCO-Prepolymer mit einem NCO-Gehalt von 2,1 % verwendet, hergestellt durch 3-stündiges Rühren eines Gemisches aus einem Polyether (Trimethylolpropan ← 83,5 % Propylenoxid ← 16,5 % Ethylenoixd) der OH-Zahl 35 und Touylen-2,4-diisocyanat im Äquivalentverhältnis NCO:OH = 2:1 bei 80°C.

Vorgelegt wird ein Gemisch aus 2.500 g Aceton, 30 g Wasser (Aceton/Wasser-Verhältnis = 83,3:1; 6,6 Mol Wasser pro NCO-Äquivalent) und 0,1 g KOH (0,02 Gew.-%, bezogen auf NCO-Prepolymer) und bis zum Rückfluß aufgeheizt. Innerhalb von 15 Minuten werden 500 g des oben beschriebenen Prepolymer zugegeben. Die Aufarbeitung erfolgt wie in Beispiel 1.
NH-Zahl (HClO₄):     26,5 mg KOH/g

Beispiel 11

In diesem Beispiel wird ein NCO-Prepolymer mit einem NCO-Gehalt von 3,9 % verwendet, hergestellt durch 3-stündiges Rühren eines Gemisches aus einem Polyester (Adipinsäure / Ethylenglykol) der OH-Zahl 56 und Touylen-2,4-diisocyanat im Äquivalentverhältnis NOC:=H = 2:1 bei 80°C.

Vorgelegt wird ein Gemsich aus 2.000 g Acetonitril, 60 g Wasser (Acetontril/Wasser-Verhältnis = 33,3:1; 7,78 Mol Wasser pro NCO-Äquivalent) und 0,2 g KOH (0,04 Gew.-%, bezogen auf NCO-Prepolymer) und bis zum Rückfluß aufgeheizt. Innerhalb von 15 Minuten werden 500 g des oben beschriebenen Prepolymer zugegeben. Die Aufarbeitung erfolgt wie in Beispiel 1.
NH-Zahl (HClO₄):     44,1 mg KOH/g
NH-Zahl (Ac₂O/Py):     42,6 mg KOH/g
S-Zahl (Ac₂O/Py):  ·  <0,1 mg KOH/g

**Ansprüche**

1. Einstufenverfahren zur Herstellung von vorzugsweise hoher molekularen Polyaminen mit primären Aminogruppen durch Hydrolyse von NCO-Gruppen aufweisenden Verbindungen in Wasser enthaltenden organischen Lösungsmitteln unter Zusatz basischer Katalysatoren, dadurch gekennzeichnet, daß man
a) NCO-Gruppen, vorzugsweise aromatisch gebundene NCO-Gruppen, aufweisenden Verbindungen mit einem NCO-Gehalt von 0,5 bis 40 Gew.-%, vorzugsweise NCO-Prepolymere mit einem NCO-Gehalt von 1,2 bis 25 Gew.-%, oder modifizierten Polyisocyanaten mit einem NCO-Gehalt von 1,5 bis 20,5 Gew.-%,

b) mit 0,75 bis 40 Molen Wasser pro Äquivalent NCO der Komponente a),
c) in Gegenwart von 0,0001 bis 0,099 Gew.-%, vorzugsweise 0,001 bis 0,08 Gew.-%, bezogen auf 100 Gew.-% der Komponente a), Kalium-, Rubidium oder Casium-Hydroxiden oder -Alkoholaten oder von 0,0001 bis 0,0099 Gew.-% vorzugsweise 0,001 bis 0,008 Gew.-% der Komponente a) entsprechender Carboxylaten als basische Katalysatoren,
d) und in Gegenwart von ≥ 10 Gew.-%, bezogen auf 100 Gew.-% der Komponent a), wassermischbarer polarer organischer Lösungsmittel mit Nitril-, Keton-, Sulfoxid-oder Ether-Gruppen und mit einem Siedebereich von 56 bis 250°C,
e) unter Aufrechterhaltung einer homogenen Reaktionsphase
bei Temperaturen von 40 und 170°C, hydrolysiert.

2. Verfahren nach Anspruch 1, dadurch gekennzeichnet, daß man die Komponente b, in Mengen von 1,5-10 Mole einsetzt.

3. Verfahren nach Ansprüchen 1 und 3, dadurch gekennzeichnet, daß man die Hydroxide oder Alkoholate in Mengen von 0,001-0,08 Gew.-% und die Carboxylate in Mengen von 0,001-0,008 Gew.-% einsetzt.

4. Verfahren nach Ansprüchen 1-3, dadurch gekennzeichnet, daß man die Komponente d) in Mengen von 40-1000 Gew.-% einsetzt.

5. Verfahren nach Ansprüchen 1-4, dadurch gekennzeichnet, daß man als Komponente c, die Kaliumverbindungen einsetzt.

6. Verfahren nach Ansprüchen 1-5, dadurch gekennzeichnet, daß man KOH oder Kaliumformat als Komponente c, verwendet.

7. Verfahren nach Ansprüchen 1-6, dadurch gekennzeichnet, daß man als Komponente d, Aceton, Acetonitril, Methylisopropylketon und/oder Dimethylsulfoxid verwendet.

8. Polyamine, die 0,46 bis 9,52 Gew.-% primäre, vorzugsweise aromatisch gebundene NH₂-Gruppen erhalten, erhältlich nach Ansprüchen 1-7.

9. Verfahren zur Herstellung von gegebenenfalls zellförmigne Polyurethan(harnstoff)en durch Umsetzung der Polyamine erhalten nach Ansprüchen 1-7, mit Polyisocyanaten, gegebenenfalls weiterer Verbindungen mit gegenüber Isocyanatgruppen reaktiven Gruppen, gegebenenfalls in Anwesenheit an sich bekannter Hilfs-und Zusatzstoffe und/oder Lösungsmittel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| P,X | EP-A-0 219 035 (BAYER)<br>* Beispiele 34, 37; Spalte 16, Zeilen 23,24,36,37 *<br>--- | 1-9 | C 07 C 85/20<br>C 08 G 18/10<br>C 08 G 18/83<br>C 08 G 18/30 |
| X | EP-A-0 097 298 (BAYER)<br>* Beispiel 4h; Ansprüche 1,9,10 *<br>----- | 1-9 | |

RECHERCHIERTE
SACHGEBIETE (Int. Cl.4)

C 07 C 85/00
C 08 G 18/00

Der vorliegende Recherchenbericht wurde für alle Patentansprüche erstellt

| Recherchenort | Abschlußdatum der Recherche | Prüfer |
|---|---|---|
| BERLIN | 15-06-1988 | KRAIL |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
 Dokument